Europäisches Patentamt

European Patent Office

Office européen des brevets

(11) Veröffentlichungsnummer: **0 306 795 B1**

# EUROPÄISCHE PATENTSCHRIFT

(45) Veröffentlichungstag der Patentschrift: **27.11.91**

(51) Int. Cl.⁵: **H02P 7/00, E05F 15/16**

(21) Anmeldenummer: **88114074.3**

(22) Anmeldetag: **29.08.88**

(54) **Elektromotorische Antriebsanordnung zur Betätigung von Fenstern, Schiebedächern oder dgl., insbesondere an Kraftfahrzeugen.**

(30) Priorität: **11.09.87 DE 3730630**

(43) Veröffentlichungstag der Anmeldung:
**15.03.89 Patentblatt 89/11**

(45) Bekanntmachung des Hinweises auf die
Patenterteilung:
**27.11.91 Patentblatt 91/48**

(84) Benannte Vertragsstaaten:
**DE FR GB IT**

(56) Entgegenhaltungen:
**DE-A- 3 151 307**
**DE-B- 2 813 956**
**GB-A- 2 018 044**

(73) Patentinhaber: **SIEMENS AKTIENGESELL-SCHAFT**
**Wittelsbacherplatz 2**
**W-8000 München 2(DE)**

(72) Erfinder: **Winter, Udo, Dr.**
**Heinrich-Lübke-Strasse 19**
**W-8702 Kürnach(DE)**
Erfinder: **Schebler, Andreas, Dipl.-Ing. FH**
**Unterer Katzenbergweg 15a**
**W-8700 Würzburg(DE)**

## Beschreibung

Die Erfindung bezieht sich auf eine elektromotorische Antriebsanordnung zur Betätigung von Fenstern, Schiebedächern od. dgl., insbesondere an Kraftfahrzeugen gemäß Oberbegriff des Anspruchs 1; eine derartige elektromotorische Antriebsanordnung ist durch die DE-PS 31 51 307 bekannt.

Bei der bekannten Anordnung wird der Betätigungsschalter durch die bei laufendem Motor induzierte Wechselspannung in Schließstellung gehalten. Die induzierte Wechselspannung wird an einer in der äußeren Anschlußleitung vor dem Kommutatormotor angeordneten gesonderten Induktivität abgegriffen, von der Grundgleichspannung durch einen Kondensator entkoppelt, dann verstärkt sowie gleichgerichtet und zum Halten des Betätigungsschalters in der Schließstellung verwendet.

Der Erfindung liegt die Aufgabe zugrunde, bei Gewährleistung einer schnellen Abschaltung des Kommutatormotors im Stillstand-Kurzschlußfall, also z.B. bei Erreichen der Endstellung des angetriebenen Fensters, den bau- und fertigungstechnischen Aufwand sowie die Baugröße zu mindern.

Die Lösung dieser Aufgabe gelingt bei einer elektromotorischen Antriebsanordnung der eingangs genannten Art durch die Lehre des Anspruchs 1; vorteilhafte Ausgestaltungen der Erfindung sind jeweils Gegenstand der Unteransprüche.

Durch die erfindungsgemäße Maßnahme kann auf den Aufwand einer gesonderten Induktivität und deren Montage sowie elektrischen Anschluß verzichtet werden, da die z.B. durch die DE-PS 28 14 009 bzw. die DE-AS 28 13 956 zur Funkentstörung eines Kommutatormotors in der Bürstenhalterung bereits vorgesehenen Funkentstördrosseln zur Erfassung der induzierten Wechselspannung mitbenutzt werden.

In besonders einfacher Weise erfolgt die elektrische Ankopplung des Betätigungsschalters an eine Funkentstördrossel durch eine um die Funkentstördrossel gewickelte Meßwicklung.

Die Erfindung sowie weitere vorteilhafte Ausgestaltungen der Erfindung werden im folgenden anhand eines Ausführungsbeispiels in der Zeichnung näher erläutert; darin zeigen:

Fig. 1 einen radialen Querschnitt durch einen Gleichstrom-Kommutatormotor im Bereich der Bürstenhalterung;

Fig. 2 einen axialen Längsschnitt durch den Gleichstrom-Kommutatormotor gemäß FIG 1;

Fig. 3 die maschinell vorgefügten Bürsten-Einzelelemente vor Einführung in die Bürstenhalterung.

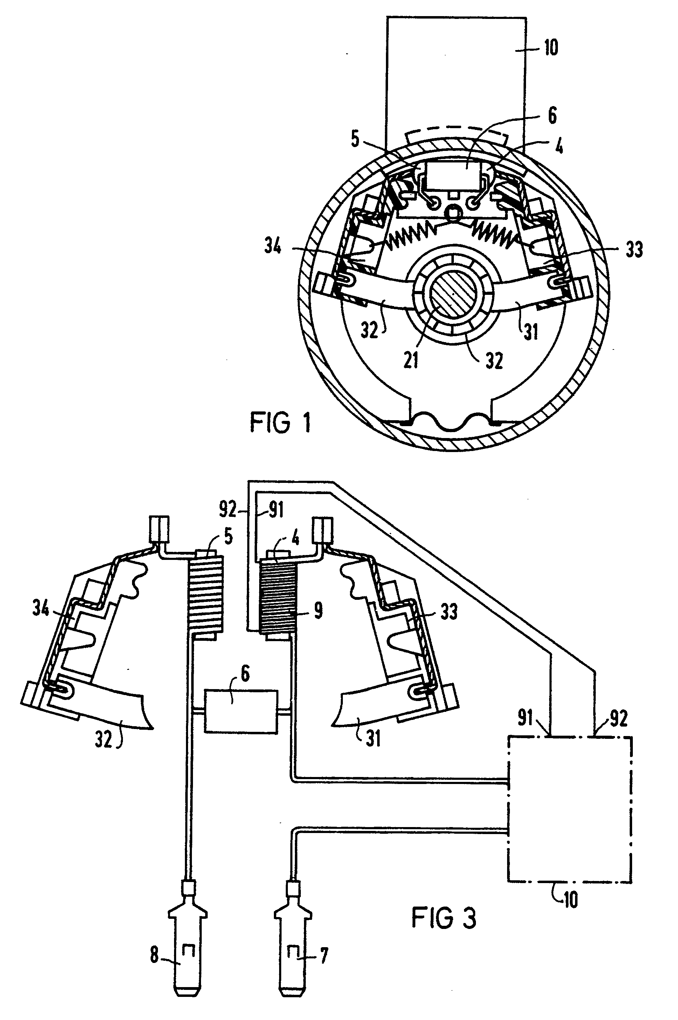

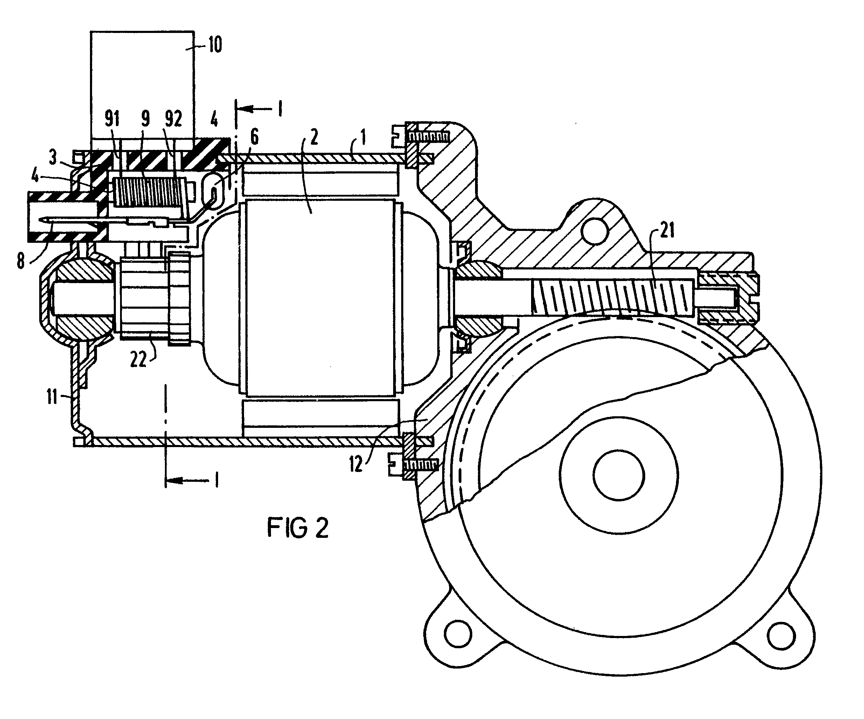

Fig. 1,2 zeigen einen Gleichstrom-Kommutatormotor, an dessen rechtes axiales Ende z.B. in hier nicht näher dargestellter Weise das Getriebegehäuse eines Kraftfahrzeug-Fensterheberantriebes angeflanscht sein kann.

In den beiden axial endseitig an einem Statorgehäuse 1 befestigten Lagerschilden 11,12 ist der Rotor 2 über eine Rotorwelle 21 drehbar gelagert, die mit ihrem rechten aus dem Lagerschild 12 herausragenden, mit einer Schneckenverzahnung versehenen Wellenende z.B. ein Schneckenrad in dem anzuflanschenden Getriebegehäuse antreibt. Auf dem linken Ende der Rotorwelle 21 ist innerhalb des Statorgehäuses 1 ein Kommutator 22 befestigt, dessen mit der Rotorwicklung versehenen Lamellen von zwei Kohlebürsten 31,32 bestrichen werden, die über Hammer-Bürstenhalter 33,34 in der axial in eine Schlitzöffnung des Statorgehäuses 1 eingeführten Bürstenhalterung schwenkbar aufgehängt sind.

Der erfindungsgemäß angeschlossene und gespeiste Betätigungsschalter 10 ist in FIG 1,2 nur schematisch dargestellt; er kann z.B. als Teil der Bürstenhalterung 3 mit dieser vormontiert und dazu sein Schaltergehäuse mit der Bürstenhalterung einstückig spritzgegossen sein.

Von der Bürstenhalterung 3 wird auch eine Funkentstöreinheit aufgenommen, die aus je einer in Reihe zu den Kohlebürsten 31, bzw.32 in den Anschlußleitungen 7 bzw.8 liegenden Funkentstördrossel 4 bzw.5 und eine parallel zu den bürstenabgewandten Enden der Funkentstördrosseln 4,5 angeordneten Funkentstörkondensator 6 besteht. In der einen äußeren Anschlußleitung 7 ist in Reihe zu der einen Funkentstördrossel 4 ein schematisch dargestellter Betätigungsschalter 10 eingefügt, der im Stillstand-Kurzschlußfall, d.h. zum Beispiel bei Erreichen einer der beiden Endlage des von dem Gleichstrom-Kommutatormotor angetriebenen Kfz-Fensters bzw. Kfz-Schiebedaches, die Stromleitung zu den Kohlebürsten 31,32 und damit zur Rotorwicklung unterbricht. Dazu ist der Betätigungsschalter 10 über innere Anschlußleitungen 91,92 mit einer Meßwicklung 9 verbunden, die um die Funkentstördrossel 4 gewickelt ist und auf diese Art und Weise eine besonders einfache potentialgetrennte Ankopplung des Betätigungsschalters 10 zur Erfassung der bei laufendem Kommutatormotor induzierten Wechselspannung erlaubt.

## Patentansprüche

1. Elektromotorische Antriebsanordnung zur Betätigung von Fenstern, Schiebedächern od. dgl., insbesondere an Kraftfahrzeugen, mit einem Gleichstrom-Kommutatormotor und einem in dessen Anschlußleitung (7) liegenden Betätigungsschalter (10), der in Schaltabhängigkeit von einer bei laufendem Motor in einer ebenfalls in der Anschlußleitung (7) vorgesehenen Induktivität induzierten Wechselspannung steht,
**dadurch gekennzeichnet,**
daß als Induktivität eine bereits vorhandene motorseitige, insbesondere auf der Bürstenhalterung (3) des Kommutatormotors angeordnete, Funkentstördrossel (4) vorgesehen ist, die zur Erfassung der induzierten Wechselspannung mitben utzt wird.

2. Elektromotorische Antriebsanordnung nach Anspruch 1,
**dadurch gekennzeichnet,**
daß der Betätigungsschalter (10) über eine um die Funkentstördrossel (4) gewickelte Meßwicklung (9) in Schaltabhängigkeit von der induzierten Wechselspannung gestellt ist.

3. Elektromotorische Antriebsanordnung nach Anspruch 1 und/oder 2,
**dadurch gekennzeichnet,**
daß der Betätigungsschalter (10) an der Bürstenhalterung (3) des Kommutatormotors angeordnet ist.

## Claims

1. An electric motor drive arrangement for actuating windows, sliding roofs or the like, in particular on motor vehicles, with a direct-current commutator motor and with an actuating switch (10) lying in its connection line (7), which switch is in switching dependence on an alternating voltage induced in an inductance also provided in the connection line (7) when the motor is running,
characterised in that as inductance there is provided a radio interference suppression reactance (4), already present arranged on the motor side in particular on the brush holder (3) of the commutator motor, which reactance is used for detecting the induced alternating voltage.

2. An electric motor drive arrangement according to claim 1, characterised in that the actuating switch (10) is adjusted by way of a measuring coil (9) wound around the radio interference suppression reactance (4) in switching dependence on the induced alternating voltage.

3. An electric motor drive arrangement according to claim 1 and/or 2, characterised in that the actuating switch (10) is arranged on the brush holder (3) of the commutator motor.

## Revendications

1. Dispositif d'entraînement à -moteur électrique pour l'actionnement de fenêtres, de toits coulissants ou analogues, notamment dans des véhicules automobiles, comportant un moteur à collecteur à courant continu et un interrupteur d'actionnement (10) qui est situé dans le conducteur de raccordement (7) de ce moteur et qui, en fonction de son état de commutation, raccordé, dépend, lorsque le moteur tourne, d'une tension alternative induite dans une inductance également prévue dans le conducteur de raccordement (7), caractérisé par le fait qu'il est prévu comme inductance une bobine d'antiparasitage (4) déjà existante, qui est prévue côté moteur, qui est disposée notamment sur le porte-balais (3) du moteur à collecteur et qui est utilisée simultanément pour détecter la tension alternative induite.

2. Dispositif d'entraînement à moteur électrique suivant la revendication 1, caractérisé par le fait que l'interrupteur d'actionnement (10) est raccordé de manière commutable à la tension alternative induite, par l'intermédiaire d'un enroulement de mesure (9) enroulé autour de la bobine d'antiparasitage (4).

3. Dispositif d'entraînement à moteur électrique suivant la revendication 1 et/ou 2, caractérisé par le fait que l'interrupteur d'actionnement (10) est disposé sur le porte-balais (3) du moteur à collecteur.

FIG 1

FIG 3

FIG 2